# EUROPEAN PATENT APPLICATION

(11) **EP 4 693 759 A1**
(43) Date of publication of application: **11.02.2026**
(21) Application number: 25194306.4
(22) Date of filing: 06.08.2025
(51) Int. Cl.: H01R 13/52, H01R 11/05, H01R 13/03, H01R 13/11, H01R 13/187, H01R 43/00

(54) **SEALED TERMINAL**

(30) Priority: 09.08.2024 CN 202411097389
(71) Applicant: Tyco Electronics (Suzhou) Ltd., Suzhou City, Jiangsu Province 215126 (CN); Tyco Electronics (Shanghai) Co., Ltd., Pilot Free Trade Zone Shanghai 200131 (CN); Tyco Electronics Technology (SIP) Ltd., Suzhou 215026 (CN)
(72) Inventor: Wang, Yun, Suzhou, 32 215123 (CN); Zhang, Jianwen, Suzhou, 32 215123 (CN); Zhang, Weidong, Shanghai, 200233 (CN)
(74) Representative: Grünecker Patent- und Rechtsanwälte PartG mbB

(57) **Abstract**

The present invention discloses a terminal, an electrical connection assembly and an electrical connection product. The terminal includes: a terminal body having a cylindrical portion; and an injection-molded seal injection molded on the cylindrical portion for sealing the mounting hole and an inner cavity of the cylindrical portion. An opening is formed in a peripheral wall of the cylindrical portion to allow an injection molding material for forming the injection-molded seal to enter the inner cavity of the cylindrical portion through the opening, so as to seal the inner cavity of the cylindrical portion, and the cylindrical portion has an injection molding zone bonded with the injection-molded seal, a layer of sealant is applied to a surface of the injection molding zone of the cylindrical portion, and the sealant is bonded between the cylindrical portion and the injection-molded seal. The present invention can cause the injection-molded seal be firmly bonded to the terminal body and no gap occurs between the two, thereby improving waterproof sealing performance.

## Description

### CROSS-REFERENCE TO RELATED APPLICATION

This application claims the benefit of Chinese Patent Application No. CN 202411097389.6 filed on August 9, 2024 in the State Intellectual Property Office of China, the whole disclosure of which is incorporated herein by reference.

### BACKGROUND OF THE INVENTION

### Field of the Invention

The present invention relates to a terminal, an electrical connection assembly including the terminal, and an electrical connection product including the terminal or the electrical connection assembly.

### Description of the Related Art

In the prior art, in order to charge a battery on a new energy vehicle, a charging dock adapted to mate with a charging gun is usually installed on the new energy vehicle. A female charging terminal is usually disposed in an insulating shell of the charging dock, and the charging gun is provided with a male charging terminal adapted to mate with the female charging terminal in the charging dock. The female charging terminal usually includes a cylindrical terminal body, a cage-shaped resilient contact inserted into an inner cavity of the terminal body, a soldering tail connected to a rear end of the terminal body, and an injection-molded seal formed on the terminal body. The seal is configured to seal a terminal mounting hole in the insulating shell of the charging dock to prevent moisture and dust from entering the interior of the charging dock through the terminal mounting hole. In the prior art, the injection-molded seal is typically bonded directly to a surface of the terminal body. Since the injection-molded seal and the terminal body are made of different materials and differ in their coefficients of thermal expansion, it is easy to have a gap between the two under the effect of thermal expansion and cold contraction, thereby reducing waterproof sealing performance.

### SUMMARY OF THE INVENTION

The present invention has been made to overcome or alleviate at least one aspect of the above mentioned disadvantages.

According to an aspect of the present invention, there is provided a terminal. The terminal is suitable for insertion into a mounting hole in an insulating shell. The terminal includes: a terminal body having a cylindrical portion; and an injection-molded seal injection-molded on the cylindrical portion for sealing the mounting hole and an inner cavity of the cylindrical portion. An opening is formed in a peripheral wall of the cylindrical portion to allow an injection molding material for forming the injection-molded seal to enter the inner cavity of the cylindrical portion through the opening, so as to seal the inner cavity of the cylindrical portion; the cylindrical portion has an injection molding zone bonded with the injection-molded seal, a layer of sealant is applied to a surface of the injection molding zone of the cylindrical portion, and the sealant is bonded between the cylindrical portion and the injection-molded seal.

According to an exemplary embodiment of the present invention, a hydrophilic plating is formed on the surface of the injection molding zone of the cylindrical portion of the terminal body, and the layer of sealant is applied to the hydrophilic plating.

According to another exemplary embodiment of the present invention, the hydrophilic plating is a tin plating or a silver plating electroplated on the surface of the injection molding zone of the cylindrical portion of the terminal body.

According to another exemplary embodiment of the present invention, the hydrophilic plating is a matte tin layer or a glossy tin layer electroplated on the surface of the injection molding zone of the cylindrical portion of the terminal body.

According to another exemplary embodiment of the present invention, at least part of the surface of the injection molding zone of the cylindrical portion of the terminal body is an uneven rough surface to enhance the bonding strength between the terminal body and the injection-molded seal.

According to another exemplary embodiment of the present invention, a score, an indentation, a groove, a projection or a rolled pattern is formed on the at least part of the surface of the injection molding zone of the cylindrical portion of the terminal body.

According to another exemplary embodiment of the present invention, the at least part of the surface of the injection molding zone of the cylindrical portion of the terminal body is corroded with plasma gas to increase the roughness of the at least part of the surface.

According to another exemplary embodiment of the present invention, a through hole and/or a slot hole for engaging with the injection-molded seal are/is formed in the peripheral wall of the injection molding zone of the cylindrical portion of the terminal body to increase the bonding strength between the terminal body and the injection-molded seal.

According to another exemplary embodiment of the present invention, a plurality of through holes and/or a plurality of arc-shaped slot holes distributed in an array are formed in the peripheral wall of the injection molding zone of the cylindrical portion of the terminal body.

According to another exemplary embodiment of the present invention, the opening is arc-shaped and extends in a circumferential direction of the cylindrical portion, and a pair of openings are formed in the cylindrical portion, the pair of openings are spaced apart in an axial direction of the cylindrical portion.

According to another exemplary embodiment of the present invention, the cylindrical portion has an arc-shaped bridge between the pair of openings, the arc-shaped bridge is embedded in the injection-molded seal.

According to another exemplary embodiment of the present invention, the cylindrical portion of the terminal body has a front end and a rear end opposite each other in an axial direction thereof, the front end of the cylindrical portion is configured to mate with an inserted mating terminal, and the injection-molded seal is formed on the rear end of the cylindrical portion.

According to another exemplary embodiment of the present invention, a plurality of contact spring arms are formed on the peripheral wall of the cylindrical portion, and the plurality of contact spring arms extend obliquely into the inner cavity of the cylindrical portion to make electrical contact with the mating terminal inserted into the inner cavity of the cylindrical portion.

According to another exemplary embodiment of the present invention, the terminal further includes: a resilient contact inserted into the inner cavity of the cylindrical portion and in electrical contact with an inner wall surface of the cylindrical portion; the resilient contact is an integral stamping-molded part and is adapted to make electrical contact with the mating terminal inserted into the inner cavity of the cylindrical portion.

According to another exemplary embodiment of the present invention, the resilient contact comprises: a pair of annular end portions in electrical contact with the inner wall surface of the cylindrical portion; and a plurality of elastic arms connected between the pair of annular end portions; the plurality of elastic arms are spaced apart in a circumferential direction of the annular end portions for electrical contact with an outer peripheral surface of the inserted mating terminal.

According to another exemplary embodiment of the present invention, the annular end portion of the resilient contact is C-shaped, and the elastic arm is arc-shaped inwardly, so that the resilient contact can be elastically deformed in radial and axial directions thereof.

According to another exemplary embodiment of the present invention, a plurality of contact projections are formed on an outer peripheral surface of the annular end portion, the plurality of contact projections are spaced apart on the entire outer peripheral surface of the annular end portion for electrical contact with the inner wall surface of the cylindrical portion.

According to another exemplary embodiment of the present invention, the inner wall surface of the cylindrical portion is formed with a plurality of front positioning projections spaced apart in a circumferential direction thereof and a plurality of rear positioning projections spaced apart in a circumferential direction thereof; and the front positioning projections and the rear positioning projections are adapted to respectively abut against the pair of annular end portions of the resilient contact so as to axially position the resilient contact.

According to another exemplary embodiment of the present invention, a locking tab is formed at the peripheral wall of the cylindrical portion of the terminal body, the locking tab is configured to lock the terminal in the mounting hole of the insulating shell.

According to another exemplary embodiment of the present invention, a guide key projecting outwardly is formed at a front end of the cylindrical portion of the terminal body, the guide key is configured to cooperate with a guide groove in the insulating shell to guide the terminal to be inserted into the mounting hole in the insulating shell in a correct orientation.

According to another exemplary embodiment of the present invention, the terminal body further has a connecting portion connected to the rear end of the cylindrical portion, the connecting portion is configured for electrical connection to a cable.

According to another exemplary embodiment of the present invention, the connecting portion of the terminal body is flat and adapted to be soldered to one end of the cable for electrical connection with the cable.

According to another exemplary embodiment of the present invention, the connecting portion of the terminal body is adapted to be crimped to one end of the cable for electrical connection with the cable.

According to another exemplary embodiment of the present invention, the terminal body is an integral stamping-molded part, the cylindrical portion of the terminal body has a joint gap, and the joint gap of the injection molding zone of the cylindrical portion is filled with sealant, to seal the joint gap in the injection molding zone of the cylindrical portion.

According to another exemplary embodiment of the present invention, the injection-molded seal is made of self-adhesive silicone.

According to another exemplary embodiment of the present invention, the injection-molded seal includes: a main body portion being cylindrical and being bonded to the peripheral wall of the cylindrical portion of the terminal body; and a pair of reinforcing projections respectively formed on front and rear end faces of the main body portion, the reinforcing projection is arc-shaped and is bonded to the peripheral wall of the cylindrical portion of the terminal body, to increase the bonding strength between the injection-molded seal and the terminal body.

According to another exemplary embodiment of the present invention, the peripheral wall of the injection molding zone of the cylindrical portion of the terminal body is embedded in the main body portion of the injection-molded seal and the pair of reinforcing projections; and the reinforcing projection has a predetermined width in an axial direction of the cylindrical portion and a predetermined length in a circumferential direction of the cylindrical portion.

According to another exemplary embodiment of the present invention, the injection-molded seal further includes: a plurality of annular sealing ribs formed on an outer peripheral surface of the main body portion and spaced apart in an axial direction; the annular sealing ribs are configured for an interference fit with an inner wall surface of the mounting hole of the insulating shell to achieve a seal between the injection-molded seal and the inner wall surface of the mounting hole.

According to another aspect of the present invention, there is provided an electrical connection assembly. The electrical connection assembly includes: the above terminal having a connecting portion connected to a rear end of a cylindrical portion of a terminal body thereof; and a cable crimped or soldered to the connecting portion of the terminal.

According to another aspect of the present invention, there is provided an electrical connection product. The electrical connection product includes: an insulating shell formed with a mounting hole; and the above terminal or the above electrical connection assembly; the terminal is inserted into the mounting hole of the insulating shell, the injection-molded seal seals the mounting hole of the insulating shell to prevent moisture and dust from entering the insulating shell through the mounting hole.

According to another exemplary embodiment of the present invention, the electrical connection product is a connector, a charging dock or a charging gun.

In each of the aforementioned exemplary embodiments according to the present disclosure, a layer of sealant is applied to a surface of an injection molding zone of a cylindrical portion of a terminal body, so that an injection-molded seal can be firmly bonded to the terminal body and no gap occurs between the two, thereby improving waterproof sealing performance.

In some of the aforementioned exemplary embodiments according to the present disclosure, by filling a joint gap of the injection molding zone of the cylindrical portion of the terminal body with the sealant, the joint gap of the injection molding zone of the cylindrical portion is sealed, thereby further improving the waterproof sealing performance.

### BRIEF DESCRIPTION OF THE DRAWINGS

The above and other features of the present invention will become more apparent by describing in detail exemplary embodiments thereof with reference to the accompanying drawings, in which:
Figure 1 shows an illustrative perspective view of a terminal according to a first exemplary embodiment of the present disclosure;
Figure 2 shows an axial cross-sectional view of a terminal according to a first exemplary embodiment of the present disclosure;
Figure 3 shows an exploded cross-sectional view of a terminal according to a first exemplary embodiment of the present disclosure;
Figure 4 shows an illustrative exploded view of a terminal according to a first exemplary embodiment of the present disclosure, as viewed from an upper side;
Figure 5 shows an illustrative exploded view of a terminal according to a first exemplary embodiment of the present disclosure, as viewed from a lower side;
Figure 6 shows an illustrative perspective view of a terminal according to a second exemplary embodiment of the present disclosure;
Figure 7 shows an axial cross-sectional view of a terminal according to a second exemplary embodiment of the present disclosure;
Figure 8 shows an illustrative exploded view of a terminal according to a second exemplary embodiment of the present disclosure;
Figure 9 shows an exploded cross-sectional view of a terminal according to a second exemplary embodiment of the present disclosure;
Figure 10 shows an illustrative perspective view of a terminal according to a third exemplary embodiment of the present disclosure;
Figure 11 shows an axial cross-sectional view of a terminal according to a third exemplary embodiment of the present disclosure;
Figure 12 shows an illustrative exploded view of a terminal according to a third exemplary embodiment of the present disclosure; and
Figure 13 shows an exploded cross-sectional view of a terminal according to a third exemplary embodiment of the present disclosure.

### DETAILED DESCRIPTION OF PREFERRED EMBODIMENTS OF THE IVENTION

Exemplary embodiments of the present disclosure will be described hereinafter in detail with reference to the attached drawings, wherein the like reference numerals refer to the like elements. The present disclosure may, however, be embodied in many different forms and should not be construed as being limited to the embodiment set forth herein; rather, these embodiments are provided so that the present disclosure will be thorough and complete, and will fully convey the concept of the disclosure to those skilled in the art.

In the following detailed description, for purposes of explanation, numerous specific details are set forth in order to provide a thorough understanding of the disclosed embodiments. It will be apparent, however, that one or more embodiments may be practiced without these specific details. In other instances, well-known structures and devices are schematically shown in order to simplify the drawing.

According to a general concept of the present invention, there is provided a terminal. The terminal is suitable for insertion into a mounting hole in an insulating shell. The terminal includes: a terminal body having a cylindrical portion; and an injection-molded seal injection molded on the cylindrical portion for sealing the mounting hole and an inner cavity of the cylindrical portion. An opening is formed in a peripheral wall of the cylindrical portion to allow an injection molding material for forming the injection-molded seal to enter the inner cavity of the cylindrical portion through the opening, so as to seal the inner cavity of the cylindrical portion, and the cylindrical portion has an injection molding zone bonded with the injection-molded seal, a layer of sealant is applied to a surface of the injection molding zone of the cylindrical portion, and the sealant is bonded between the cylindrical portion and the injection-molded seal.

According to another general concept of the present invention, there is provided an electrical connection assembly. The electrical connection assembly includes: the above terminal having a connecting portion connected to a rear end of a cylindrical portion of a terminal body thereof; and a cable crimped or soldered to the connecting portion of the terminal.

According to another general concept of the present invention, there is provided an electrical connection product. The electrical connection product includes: an insulating shell formed with a mounting hole; and the above terminal or the above electrical connection assembly; the terminal is inserted into the mounting hole of the insulating shell, the injection-molded seal seals the mounting hole of the insulating shell to prevent moisture and dust from entering the insulating shell through the mounting hole.

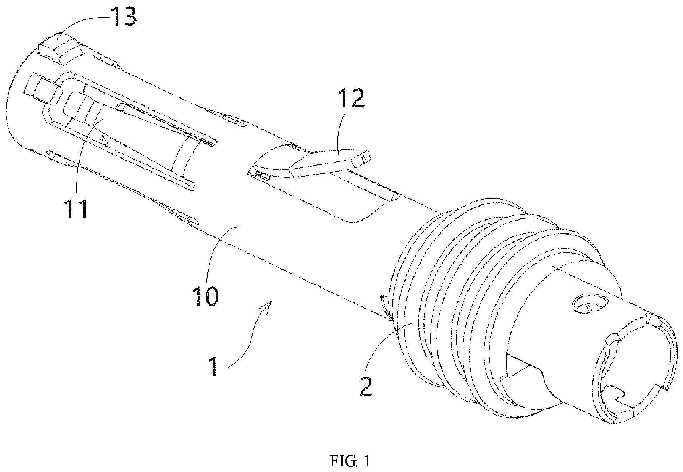

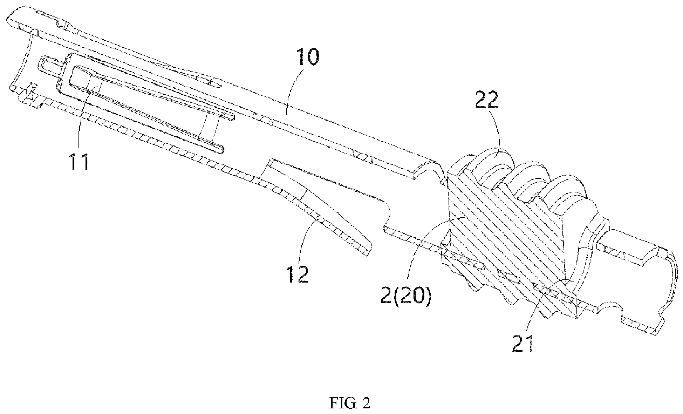

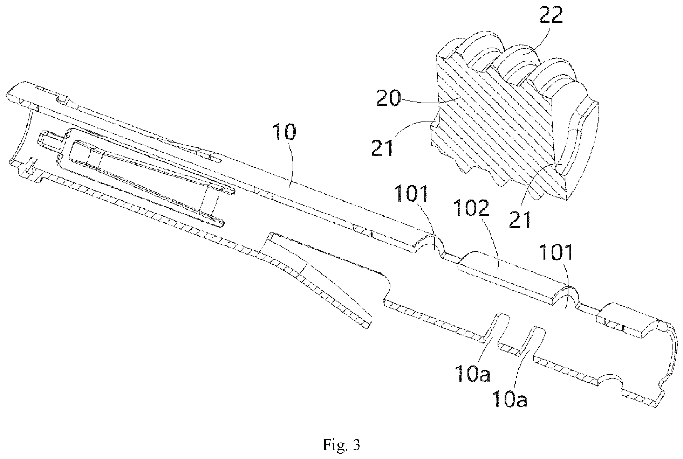

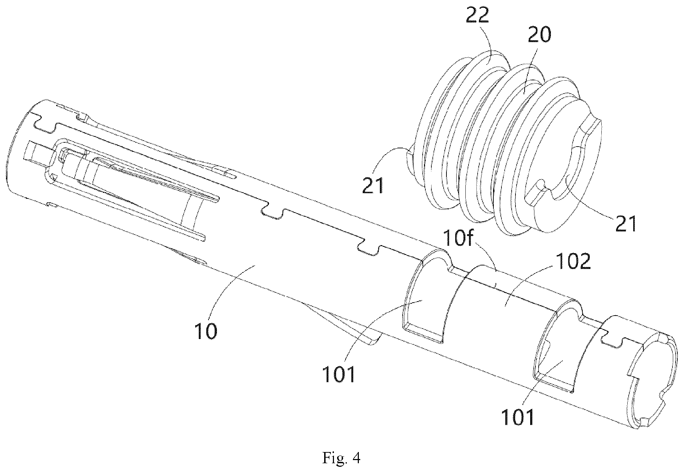

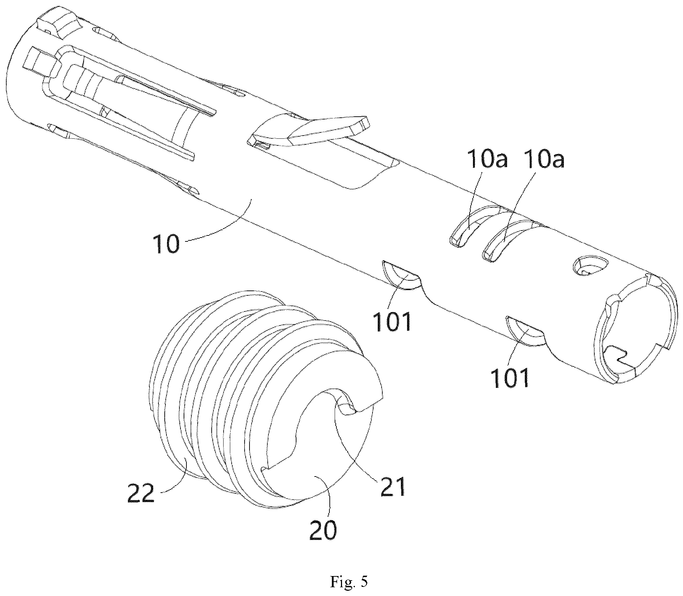

Figure 1 to Figure 5 show a first embodiment according to the present disclosure. Among them, Figure 1 shows an illustrative perspective view of a terminal according to a first exemplary embodiment of the present disclosure; Figure 2 shows an axial cross-sectional view of a terminal according to a first exemplary embodiment of the present disclosure; Figure 3 shows an exploded cross-sectional view of a terminal according to a first exemplary embodiment of the present disclosure; Figure 4 shows an illustrative exploded view of a terminal according to a first exemplary embodiment of the present disclosure, as viewed from an upper side; Figure 5 shows an illustrative exploded view of a terminal according to a first exemplary embodiment of the present disclosure, as viewed from a lower side.

As shown in Figures 1 to 5, in an exemplary embodiment of the present invention, a terminal is disclosed. The terminal is suitable for insertion into a mounting hole (not shown) in an insulating shell (not shown). The terminal includes: a terminal body 1 and an injection-molded seal 2. The terminal body 1 has a cylindrical portion 10. The injection-molded seal 2 is injection molded on the cylindrical portion 10 for sealing the mounting hole and an inner cavity of the cylindrical portion 10. An opening 101 is formed in a peripheral wall of the cylindrical portion 10 to allow an injection molding material for forming the injection-molded seal 2 to enter the inner cavity of the cylindrical portion 10 through the opening 101, so as to seal the inner cavity of the cylindrical portion 10. The cylindrical portion 10 of the terminal body 1 has an injection molding zone bonded with the injection-molded seal 2, a layer of sealant is applied to a surface of the injection molding zone of the cylindrical portion 10 of the terminal body 1, and the sealant is bonded between the cylindrical portion 10 of the terminal body 1 and the injection-molded seal 2.

As shown in Figures 1 to 5, in the illustrated embodiment, a hydrophilic plating is formed on the surface of the injection molding zone of the cylindrical portion 10 of the terminal body 1, and the layer of sealant is applied to the hydrophilic plating.

As shown in Figures 1 to 5, in the illustrated embodiment, the hydrophilic plating is a tin plating or a silver plating electroplated on the surface of the injection molding zone of the cylindrical portion 10 of the terminal body 1.

As shown in Figures 1 to 5, in the illustrated embodiment, the hydrophilic plating is a matte tin layer or a glossy tin layer electroplated on the surface of the injection molding zone of the cylindrical portion 10 of the terminal body 1.

As shown in Figures 1 to 5, in the illustrated embodiment, at least part of the surface of the injection molding zone of the cylindrical portion 10 of the terminal body 1 is an uneven rough surface to enhance the bonding strength between the terminal body 1 and the injection-molded seal 2.

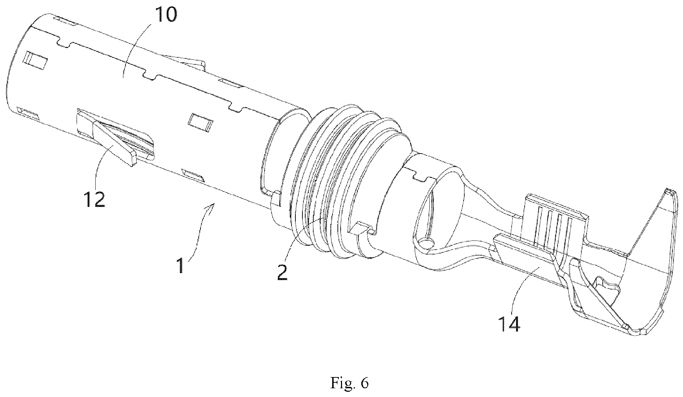

As shown in Figures 1 to 5, in the illustrated embodiment, a score, an indentation, a groove, a projection or a rolled pattern 10b (see Figures 6-13) is formed on the at least part of the surface of the injection molding zone of the cylindrical portion 10 of the terminal body 1. For example, in an exemplary embodiment of the present invention, the at least part of the surface of the injection molding zone of the cylindrical portion 10 of the terminal body 1 is corroded with plasma gas (i.e., an etching treatment) to increase the at least part of the surface of the injection molding zone of the cylindrical portion 10 of the terminal body 1.

As shown in Figures 1 to 5, in the illustrated embodiment, a through hole and/or a slot hole 10a for engaging with the injection-molded seal 2 are/is formed in the peripheral wall of the injection molding zone of the cylindrical portion 10 of the terminal body 1 to increase the bonding strength between the terminal body 1 and the injection-molded seal 2.

As shown in Figures 1 to 5, in the illustrated embodiment, a plurality of through holes and/or a plurality of arc-shaped slot holes 10a distributed in an array are formed in the peripheral wall of the injection molding zone of the cylindrical portion 10 of the terminal body 1.

As shown in Figures 1 to 5, in the illustrated embodiment, the opening 101 is arc-shaped and extends in a circumferential direction of the cylindrical portion 10, and a pair of openings 101 are formed in the cylindrical portion 10, the pair of openings 101 are spaced apart in an axial direction of the cylindrical portion 10.

As shown in Figures 1 to 5, in the illustrated embodiment, the cylindrical portion 10 has an arc-shaped bridge 102 between the pair of openings 101, the arc-shaped bridge 102 is embedded in the injection-molded seal 2.

As shown in Figures 1 to 5, in the illustrated embodiment, the cylindrical portion 10 of the terminal body 1 has a front end and a rear end opposite each other in an axial direction thereof, the front end of the cylindrical portion 10 is configured to mate with an inserted mating terminal, and the injection-molded seal 2 is formed on the rear end of the cylindrical portion 10.

As shown in Figures 1 to 5, in the illustrated embodiment, a plurality of contact spring arms 11 are formed on the peripheral wall of the cylindrical portion 10, and the plurality of contact spring arms 11 extend obliquely into the inner cavity of the cylindrical portion 10 to make electrical contact with the mating terminal inserted into the inner cavity of the cylindrical portion 10.

As shown in Figures 1 to 5, in the illustrated embodiment, a locking tab 12 is formed at the peripheral wall of the cylindrical portion 10 of the terminal body 1, the locking tab 12 is configured to lock the terminal in the mounting hole of the insulating shell.

As shown in Figures 1 to 5, in the illustrated embodiment, a guide key 13 projecting outwardly is formed at a front end of the cylindrical portion 10 of the terminal body 1, the guide key 13 is configured to cooperate with a guide groove in the insulating shell to guide the terminal to be inserted into the mounting hole in the insulating shell in a correct orientation.

As shown in Figures 1 to 5, in the illustrated embodiment, the terminal body 1 further has a connecting portion 14 (see Figures 6 -13) connected to the rear end of the cylindrical portion 10, the connecting portion 14 is configured for electrical connection to a cable (not shown).

As shown in Figures 1 to 5, in the illustrated embodiment, the connecting portion 14 of the terminal body 1 is flat and adapted to be soldered to one end of the cable for electrical connection with the cable.

As shown in Figures 1 to 5, in the illustrated embodiment, the connecting portion 14 of the terminal body 1 is adapted to be crimped to one end of the cable for electrical connection with the cable.

As shown in Figures 1 to 5, in the illustrated embodiment, the terminal body 1 is an integral stamping-molded part, the cylindrical portion 10 of the terminal body 1 has a joint gap 10f, and the joint gap 10f of the injection molding zone of the cylindrical portion 10 is filled with sealant, to seal the joint gap 10f in the injection molding zone of the cylindrical portion 10.

As shown in Figures 1 to 5, in the illustrated embodiment, the injection-molded seal 2 is made of self-adhesive silicone.

As shown in Figures 1 to 5, in the illustrated embodiment, the injection-molded seal 2 comprises: a main body portion 20 and a pair of reinforcing projections 21. The main body portion 20 is cylindrical and is bonded to the peripheral wall of the cylindrical portion 10 of the terminal body 1. The pair of reinforcing projections 21 is respectively formed on front and rear end faces of the main body portion 20. The reinforcing projection 21 is arc-shaped and is bonded to the peripheral wall of the cylindrical portion 10 of the terminal body 1, to increase the bonding strength between the injection-molded seal 2 and the terminal body 1.

As shown in Figures 1 to 5, in the illustrated embodiment, the peripheral wall of the injection molding zone of the cylindrical portion 10 of the terminal body 1 is embedded in the main body portion 20 of the injection-molded seal 2 and the pair of reinforcing projections 21. The reinforcing projection 21 has a predetermined width in an axial direction of the cylindrical portion 10 and a predetermined length in a circumferential direction of the cylindrical portion 10.

As shown in Figures 1 to 5, in the illustrated embodiment, the injection-molded seal 2 further includes: a plurality of annular sealing ribs 22 formed on an outer peripheral surface of the main body portion 20 and spaced apart in an axial direction. The annular sealing ribs 22 are configured for an interference fit with an inner wall surface of the mounting hole of the insulating shell to achieve a seal between the injection-molded seal 2 and the inner wall surface of the mounting hole.

As shown in Figures 1 to 5, in another exemplary embodiment of the present invention, an electrical connection assembly is also disclosed. The electrical connection assembly includes: the above terminal and cable (not shown). The terminal has a connecting portion 14 connected to a rear end of a cylindrical portion 10 of a terminal body 1 thereof. The cable is crimped or soldered to the connecting portion 14 of the terminal.

As shown in Figures 1 to 5, in another exemplary embodiment of the present invention, an electrical connection product. The electrical connection product includes: an insulating shell and the above terminal or electrical connection assembly. The insulating shell is formed with a mounting hole. The terminal is inserted into the mounting hole of the insulating shell, the injection-molded seal 2 seals the mounting hole of the insulating shell to prevent moisture and dust from entering the insulating shell through the mounting hole.

As shown in Figures 1 to 5, in the illustrated embodiment, the electrical connection product is a connector, a charging dock or a charging gun.

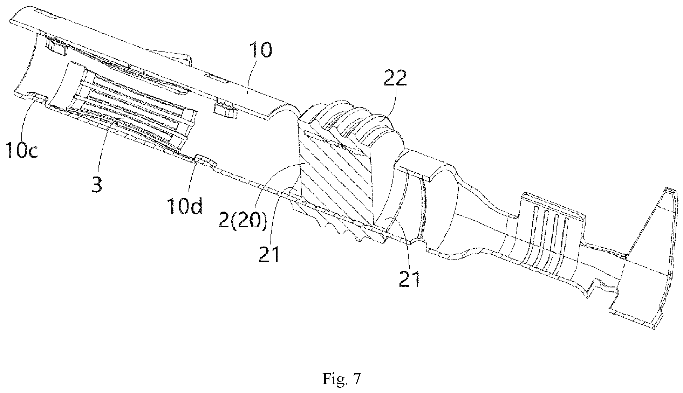

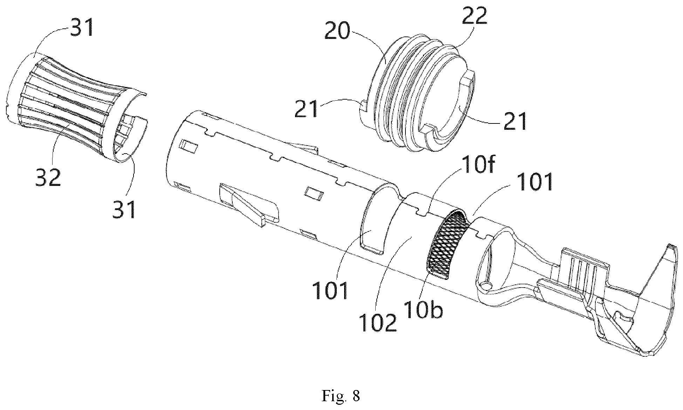

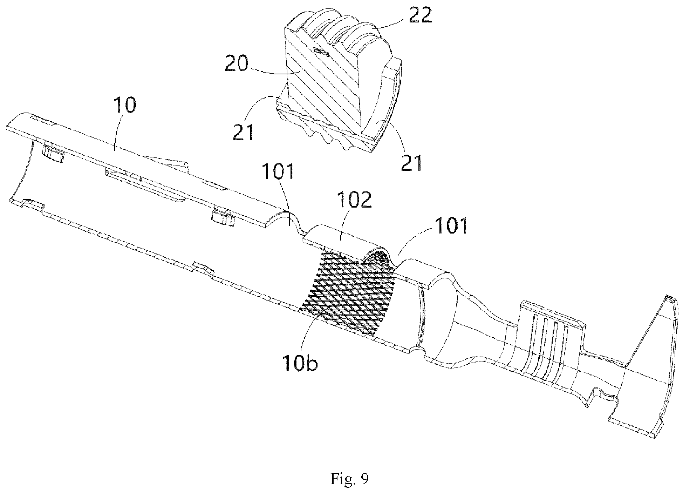

Figure 6 to Figure 9 show a second embodiment according to the present disclosure. Among them, Figure 6 shows an illustrative perspective view of a terminal according to a second exemplary embodiment of the present disclosure; Figure 7 shows an axial cross-sectional view of a terminal according to a second exemplary embodiment of the present disclosure; Figure 8 shows an illustrative exploded view of a terminal according to a second exemplary embodiment of the present disclosure; Figure 9 shows an exploded cross-sectional view of a terminal according to a second exemplary embodiment of the present disclosure.

As shown in Figures 6 to 9, in an exemplary embodiment of the present invention, a terminal is disclosed. The terminal is suitable for insertion into a mounting hole (not shown) in an insulating shell (not shown). The terminal includes: a terminal body 1 and an injection-molded seal 2. The terminal body 1 has a cylindrical portion 10. The injection-molded seal 2 is injection molded on the cylindrical portion 10 for sealing the mounting hole and an inner cavity of the cylindrical portion 10. An opening 101 is formed in a peripheral wall of the cylindrical portion 10 to allow an injection molding material for forming the injection-molded seal 2 to enter the inner cavity of the cylindrical portion 10 through the opening 101, so as to seal the inner cavity of the cylindrical portion 10. The cylindrical portion 10 of the terminal body 1 has an injection molding zone bonded with the injection-molded seal 2, a layer of sealant is applied to a surface of the injection molding zone of the cylindrical portion 10 of the terminal body 1, and the sealant is bonded between the cylindrical portion 10 of the terminal body 1 and the injection-molded seal 2.

As shown in Figures 6 to 9, in the illustrated embodiment, a hydrophilic plating is formed on the surface of the injection molding zone of the cylindrical portion 10 of the terminal body 1, and the layer of sealant is applied to the hydrophilic plating.

As shown in Figures 6 to 9, in the illustrated embodiment, the hydrophilic plating is a tin plating or a silver plating electroplated on the surface of the injection molding zone of the cylindrical portion 10 of the terminal body 1.

As shown in Figures 6 to 9, in the illustrated embodiment, the hydrophilic plating is a matte tin layer or a glossy tin layer electroplated on the surface of the injection molding zone of the cylindrical portion 10 of the terminal body 1.

As shown in Figures 6 to 9, in the illustrated embodiment, at least part of the surface of the injection molding zone of the cylindrical portion 10 of the terminal body 1 is an uneven rough surface to enhance the bonding strength between the terminal body 1 and the injection-molded seal 2.

As shown in Figures 6 to 9, in the illustrated embodiment, a score, an indentation, a groove, a projection or a rolled pattern 10b is formed on the at least part of the surface of the injection molding zone of the cylindrical portion 10 of the terminal body 1. For example, in an exemplary embodiment of the present invention, the at least part of the surface of the injection molding zone of the cylindrical portion 10 of the terminal body 1 is corroded with plasma gas (i.e., an etching treatment) to increase the at least part of the surface of the injection molding zone of the cylindrical portion 10 of the terminal body 1.

As shown in Figures 6 to 9, in the illustrated embodiment, a through hole and/or a slot hole 10a (see Figures 1-5) for engaging with the injection-molded seal 2 are/is formed in the peripheral wall of the injection molding zone of the cylindrical portion 10 of the terminal body 1 to increase the bonding strength between the terminal body 1 and the injection-molded seal 2.

As shown in Figures 6 to 9, in the illustrated embodiment, a plurality of through holes and/or a plurality of arc-shaped slot holes 10a distributed in an array are formed in the peripheral wall of the injection molding zone of the cylindrical portion 10 of the terminal body 1.

As shown in Figures 6 to 9, in the illustrated embodiment, the opening 101 is arc-shaped and extends in a circumferential direction of the cylindrical portion 10, and a pair of openings 101 are formed in the cylindrical portion 10, the pair of openings 101 are spaced apart in an axial direction of the cylindrical portion 10.

As shown in Figures 6 to 9, in the illustrated embodiment, the cylindrical portion 10 has an arc-shaped bridge 102 between the pair of openings 101, the arc-shaped bridge 102 is embedded in the injection-molded seal 2.

As shown in Figures 6 to 9, in the illustrated embodiment, the cylindrical portion 10 of the terminal body 1 has a front end and a rear end opposite each other in an axial direction thereof, the front end of the cylindrical portion 10 is configured to mate with an inserted mating terminal, and the injection-molded seal 2 is formed on the rear end of the cylindrical portion 10.

As shown in Figures 6 to 9, in the illustrated embodiment, the terminal further includes: a resilient contact 3, the resilient contact 3 is inserted into the inner cavity of the cylindrical portion 10 and in electrical contact with an inner wall surface of the cylindrical portion 10. The resilient contact 3 is an integral stamping-molded part and is adapted to make electrical contact with the mating terminal inserted into the inner cavity of the cylindrical portion 10.

As shown in Figures 6 to 9, in the illustrated embodiment, the resilient contact 3 includes: a pair of annular end portions 31 and a plurality of elastic arms 32. The pair of annular end portions 31 is in electrical contact with the inner wall surface of the cylindrical portion 10. The plurality of elastic arms 32 is connected between the pair of annular end portions 31. The plurality of elastic arms 32 are spaced apart in a circumferential direction of the annular end portions 31 for electrical contact with an outer peripheral surface of the inserted mating terminal.

As shown in Figures 6 to 9, in the illustrated embodiment, the annular end portion 31 of the resilient contact 3 is C-shaped, and the elastic arm 32 is arc-shaped inwardly, so that the resilient contact 3 can be elastically deformed in radial and axial directions thereof.

As shown in Figures 6 to 9, in the illustrated embodiment, a plurality of contact projections 3a are formed on an outer peripheral surface of the annular end portion 31, the plurality of contact projections 3a are spaced apart on the entire outer peripheral surface of the annular end portion 31 for electrical contact with the inner wall surface of the cylindrical portion 10.

As shown in Figures 6 to 9, in the illustrated embodiment, the inner wall surface of the cylindrical portion 10 is formed with a plurality of front positioning projections 10c spaced apart in a circumferential direction thereof and a plurality of rear positioning projections 10d spaced apart in a circumferential direction thereof. The front positioning projections 10c and the rear positioning projections 10d are adapted to respectively abut against the pair of annular end portions 31 of the resilient contact 3 so as to axially position the resilient contact 3.

As shown in Figures 6 to 9, in the illustrated embodiment, a locking tab 12 is formed at the peripheral wall of the cylindrical portion 10 of the terminal body 1, the locking tab 12 is configured to lock the terminal in the mounting hole of the insulating shell.

As shown in Figures 6 to 9, in the illustrated embodiment, the terminal body 1 further has a connecting portion 14 connected to the rear end of the cylindrical portion 10, the connecting portion 14 is configured for electrical connection to a cable (not shown).

As shown in Figures 6 to 9, in the illustrated embodiment, the connecting portion 14 of the terminal body 1 is adapted to be crimped to one end of the cable for electrical connection with the cable.

As shown in Figures 6 to 9, in the illustrated embodiment, the terminal body 1 is an integral stamping-molded part, the cylindrical portion 10 of the terminal body 1 has a joint gap 10f, and the joint gap 10f of the injection molding zone of the cylindrical portion 10 is filled with sealant, to seal the joint gap 10f in the injection molding zone of the cylindrical portion 10.

As shown in Figures 6 to 9, in the illustrated embodiment, the injection-molded seal 2 is made of self-adhesive silicone.

As shown in Figures 6 to 9, in the illustrated embodiment, the injection-molded seal 2 includes: a main body portion 20 and a pair of reinforcing projections 21. The main body portion 20 is cylindrical and is bonded to the peripheral wall of the cylindrical portion 10 of the terminal body 1. The pair of reinforcing projections 21 are respectively formed on front and rear end faces of the main body portion 20. The reinforcing projection 21 is arc-shaped and is bonded to the peripheral wall of the cylindrical portion 10 of the terminal body 1, to increase the bonding strength between the injection-molded seal 2 and the terminal body 1.

As shown in Figures 6 to 9, in the illustrated embodiment, the peripheral wall of the injection molding zone of the cylindrical portion 10 of the terminal body 1 is embedded in the main body portion 20 of the injection-molded seal 2 and the pair of reinforcing projections 21. The reinforcing projection 21 has a predetermined width in an axial direction of the cylindrical portion 10 and a predetermined length in a circumferential direction of the cylindrical portion 10.

As shown in Figures 6 to 9, in the illustrated embodiment, the injection-molded seal 2 further includes: a plurality of annular sealing ribs 22 formed on an outer peripheral surface of the main body portion 20 and spaced apart in an axial direction. The annular sealing ribs 22 are configured for an interference fit with an inner wall surface of the mounting hole of the insulating shell to achieve a seal between the injection-molded seal 2 and the inner wall surface of the mounting hole.

As shown in Figures 6 to 9, in another exemplary embodiment of the present invention, an electrical connection assembly is also disclosed. The electrical connection assembly includes: the above terminal and a cable (not shown). The terminal has a connecting portion 14 connected to a rear end of a cylindrical portion 10 of a terminal body 1 thereof. The cable crimped or soldered to the connecting portion 14 of the terminal.

As shown in Figures 6 to 9, in another exemplary embodiment of the present invention, an electrical connection product. The electrical connection product includes: an insulating shell and the above terminal or the above electrical connection assembly. A mounting hole is formed within the insulating shell. The terminal is inserted into the mounting hole of the insulating shell, the injection-molded seal 2 seals the mounting hole of the insulating shell to prevent moisture and dust from entering the insulating shell through the mounting hole.

As shown in Figures 6 to 9, in the illustrated embodiment, the electrical connection product is a connector, a charging dock or a charging gun.

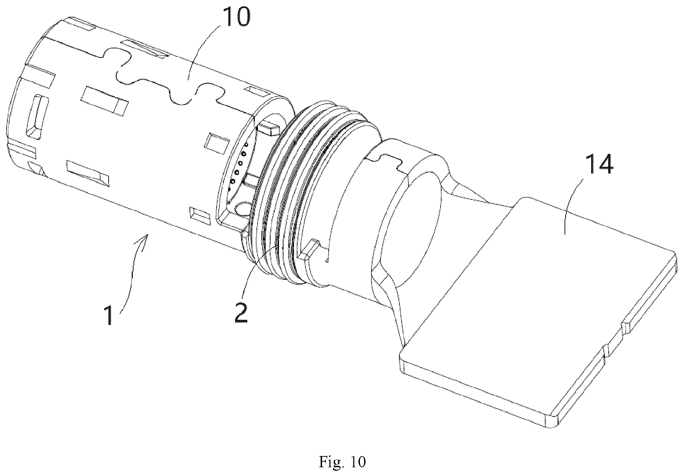

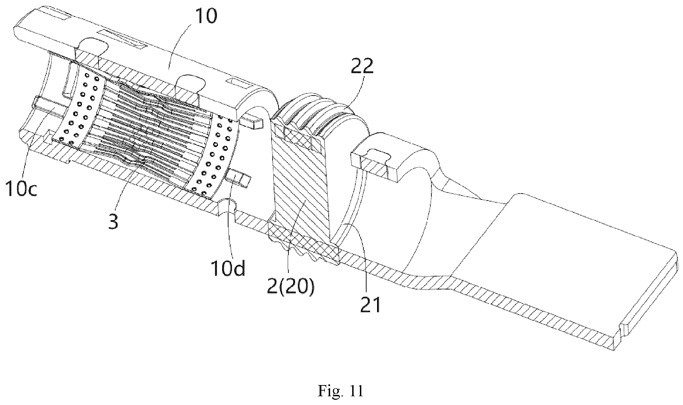

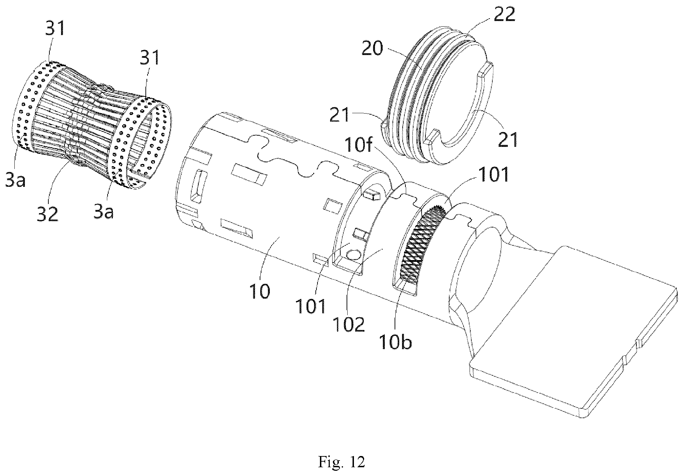

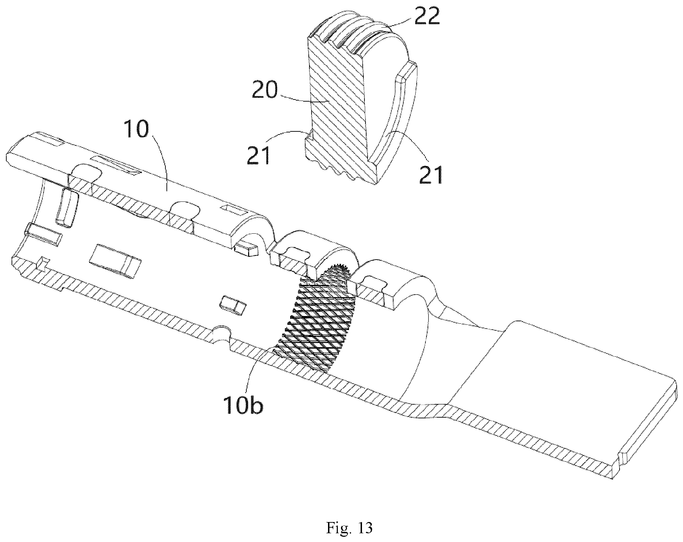

Figure 10 to Figure 13 show a third embodiment according to the present disclosure. Among them, Figure 10 shows an illustrative perspective view of a terminal according to a third exemplary embodiment of the present disclosure; Figure 11 shows an axial cross-sectional view of a terminal according to a third exemplary embodiment of the present disclosure; Figure 12 shows an illustrative exploded view of a terminal according to a third exemplary embodiment of the present disclosure; Figure 13 shows an exploded cross-sectional view of a terminal according to a third exemplary embodiment of the present disclosure.

As shown in Figures 10 to 13, in an exemplary embodiment of the present invention, a terminal is disclosed. The terminal is suitable for insertion into a mounting hole (not shown) in an insulating shell (not shown). The terminal includes: a terminal body 1 and an injection-molded seal 2. The terminal body 1 has a cylindrical portion 10. The injection-molded seal 2 is injection molded on the cylindrical portion 10 for sealing the mounting hole and an inner cavity of the cylindrical portion 10. An opening 101 is formed in a peripheral wall of the cylindrical portion 10 to allow an injection molding material for forming the injection-molded seal 2 to enter the inner cavity of the cylindrical portion 10 through the opening 101, so as to seal the inner cavity of the cylindrical portion 10. The cylindrical portion 10 of the terminal body 1 has an injection molding zone bonded with the injection-molded seal 2, a layer of sealant is applied to a surface of the injection molding zone of the cylindrical portion 10 of the terminal body 1, and the sealant is bonded between the cylindrical portion 10 of the terminal body 1 and the injection-molded seal 2.

As shown in Figures 10 to 13, in the illustrated embodiment of the present invention, a hydrophilic plating is formed on the surface of the injection molding zone of the cylindrical portion 10 of the terminal body 1, and the above layer of sealant is applied to the hydrophilic plating.

As shown in Figures 10 to 13, in the illustrated embodiment of the present invention, the hydrophilic plating is a tin plating or a silver plating electroplated on the surface of the injection molding zone of the cylindrical portion 10 of the terminal body 1.

As shown in Figures 10 to 13, in the illustrated embodiment of the present invention, the hydrophilic plating is a matte tin layer or a glossy tin layer electroplated on the surface of the injection molding zone of the cylindrical portion 10 of the terminal body 1.

As shown in Figures 10 to 13, in the illustrated embodiment of the present invention, at least part of the surface of the injection molding zone of the cylindrical portion 10 of the terminal body 1 is an uneven rough surface to enhance the bonding strength between the terminal body 1 and the injection-molded seal 2.

As shown in Figures 10 to 13, in the illustrated embodiment of the present invention, a score, an indentation, a groove, a projection or a rolled pattern 10b is formed on the at least part of the surface of the injection molding zone of the cylindrical portion 10 of the terminal body 1. For example, in an exemplary embodiment of the present invention, the at least part of the surface of the injection molding zone of the cylindrical portion 10 of the terminal body 1 is corroded with plasma gas (i.e., an etching treatment) to increase the at least part of the surface of the injection molding zone of the cylindrical portion 10 of the terminal body 1.

As shown in Figures 10 to 13, in the illustrated embodiment of the present invention, a through hole and/or a slot hole 10a (see Figures 1-5) for engaging with the injection-molded seal 2 are/is formed in the peripheral wall of the injection molding zone of the cylindrical portion 10 of the terminal body 1 to increase the bonding strength between the terminal body 1 and the injection-molded seal 2.

As shown in Figures 10 to 13, in the illustrated embodiment of the present invention, a plurality of through holes and/or a plurality of arc-shaped slot holes 10a distributed in an array are formed in the peripheral wall of the injection molding zone of the cylindrical portion 10 of the terminal body 1.

As shown in Figures 10 to 13, in the illustrated embodiment of the present invention, the opening 101 is arc-shaped and extends in a circumferential direction of the cylindrical portion 10, and a pair of openings 101 are formed in the cylindrical portion 10, the pair of openings 101 are spaced apart in an axial direction of the cylindrical portion 10.

As shown in Figures 10 to 13, in the illustrated embodiment of the present invention, the cylindrical portion 10 has an arc-shaped bridge 102 between the pair of openings 101, the arc-shaped bridge 102 is embedded in the injection-molded seal 2.

As shown in Figures 10 to 13, in the illustrated embodiment of the present invention, the cylindrical portion 10 of the terminal body 1 has a front end and a rear end opposite each other in an axial direction thereof, the front end of the cylindrical portion 10 is configured to mate with an inserted mating terminal, and the injection-molded seal 2 is formed on the rear end of the cylindrical portion 10.

As shown in Figures 10 to 13, in the illustrated embodiment of the present invention, the terminal further includes: a resilient contact 3 inserted into the inner cavity of the cylindrical portion 10 and in electrical contact with an inner wall surface of the cylindrical portion 10. The resilient contact 3 is an integral stamping-molded part and is adapted to make electrical contact with the mating terminal inserted into the inner cavity of the cylindrical portion 10.

As shown in Figures 10 to 13, in the illustrated embodiment of the present invention, the resilient contact 3 includes: a pair of annular end portions 31 and a plurality of elastic arms 32. The pair of annular end portions 31 are in electrical contact with the inner wall surface of the cylindrical portion 10. The plurality of elastic arms 32 are connected between the pair of annular end portions 31. The plurality of elastic arms 32 are spaced apart in a circumferential direction of the annular end portions 31 for electrical contact with an outer peripheral surface of the inserted mating terminal.

As shown in Figures 10 to 13, in the illustrated embodiment of the present invention, the annular end portion 31 of the resilient contact 3 is C-shaped, and the elastic arm 32 is arc-shaped inwardly, so that the resilient contact 3 can be elastically deformed in radial and axial directions thereof.

As shown in Figures 10 to 13, in the illustrated embodiment of the present invention, a plurality of contact projections 3a are formed on an outer peripheral surface of the annular end portion 31, the plurality of contact projections 3a are spaced apart on the entire outer peripheral surface of the annular end portion 31 for electrical contact with the inner wall surface of the cylindrical portion 10.

As shown in Figures 10 to 13, in the illustrated embodiment of the present invention, the inner wall surface of the cylindrical portion 10 is formed with a plurality of front positioning projections 10c spaced apart in a circumferential direction thereof and a plurality of rear positioning projections 10d spaced apart in a circumferential direction thereof. The front positioning projections 10c and the rear positioning projections 10d are adapted to respectively abut against the pair of annular end portions 31 of the resilient contact 3 so as to axially position the resilient contact 3.

As shown in Figures 10 to 13, in the illustrated embodiment of the present invention, a locking tab 12 is formed at the peripheral wall of the cylindrical portion 10 of the terminal body 1, the locking tab 12 is configured to lock the terminal in the mounting hole of the insulating shell.

As shown in Figures 10 to 13, in the illustrated embodiment of the present invention, the terminal body 1 further has a connecting portion 14 connected to the rear end of the cylindrical portion 10, the connecting portion 14 is configured for electrical connection to a cable (not shown).

As shown in Figures 10 to 13, in the illustrated embodiment of the present invention, the connecting portion 14 of the terminal body 1 is flat and adapted to be soldered to one end of the cable for electrical connection with the cable.

As shown in Figures 10 to 13, in the illustrated embodiment of the present invention, the terminal body 1 is an integral stamping-molded part, the cylindrical portion 10 of the terminal body 1 has a joint gap 10f, and the joint gap 10f of the injection molding zone of the cylindrical portion 10 is filled with sealant, to seal the joint gap 10f in the injection molding zone of the cylindrical portion 10.

As shown in Figures 10 to 13, in the illustrated embodiment of the present invention, the injection-molded seal 2 is made of self-adhesive silicone.

As shown in Figures 10 to 13, in the illustrated of the present invention, the injection-molded seal 2 includes: a main body portion 20 and a pair of reinforcing projections 21. The main body portion 20 is cylindrical and is bonded to the peripheral wall of the cylindrical portion 10 of the terminal body 1. The pair of reinforcing projections 21 respectively are formed on front and rear end faces of the main body portion 20. The reinforcing projection 21 is arc-shaped and is bonded to the peripheral wall of the cylindrical portion 10 of the terminal body 1, to increase the bonding strength between the injection-molded seal 2 and the terminal body 1.

As shown in Figures 10 to 13, in the illustrated embodiment of the present invention, the peripheral wall of the injection molding zone of the cylindrical portion 10 of the terminal body 1 is embedded in the main body portion 20 of the injection-molded seal 2 and the pair of reinforcing projections 21. The reinforcing projection 21 has a predetermined width in an axial direction of the cylindrical portion 10 and a predetermined length in a circumferential direction of the cylindrical portion 10.

As shown in Figures 10 to 13, in the illustrated embodiment of the present invention, the injection-molded seal 2 further includes: a plurality of annular sealing ribs 22 formed on an outer peripheral surface of the main body portion 20 and spaced apart in an axial direction. The annular sealing ribs 22 are configured for an interference fit with an inner wall surface of the mounting hole of the insulating shell to achieve a seal between the injection-molded seal 2 and the inner wall surface of the mounting hole.

As shown in Figures 10 to 13, in another exemplary embodiment of the present invention, an electrical connection assembly is also disclosed. The electrical connection assembly includes: the above terminal and cable (not shown). The terminal has a connecting portion 14 connected to a rear end of a cylindrical portion 10 of a terminal body 1 thereof. The cable is crimped or soldered to the connecting portion 14 of the terminal.

As shown in Figures 10 to 13, in another exemplary embodiment of the present invention, an electrical connection product is also disclosed. The electrical connection product includes: an insulating shell, and the above terminal or electrical connection assembly. A mounting hole is formed within the insulating shell. The terminal is inserted into the mounting hole of the insulating shell, the injection-molded seal 2 seals the mounting hole of the insulating shell to prevent moisture and dust from entering the insulating shell through the mounting hole.

As shown in Figures 10 to 13, in the illustrated embodiment, the electrical connection product is a connector, a charging dock or a charging gun.

It should be appreciated for those skilled in this art that the above embodiments are intended to be illustrated, and not restrictive. For example, many modifications may be made to the above embodiments by those skilled in this art, and various features described in different embodiments may be freely combined with each other without conflicting in configuration or principle.

Although several exemplary embodiments have been shown and described, it would be appreciated by those skilled in the art that various changes or modifications may be made in these embodiments without departing from the principles and spirit of the disclosure, the scope of which is defined in the claims and their equivalents.

As used herein, an element recited in the singular and proceeded with the word "a" or "an" should be understood as not excluding plural of said elements or steps, unless such exclusion is explicitly stated. Furthermore, references to "one embodiment" of the present invention are not intended to be interpreted as excluding the existence of additional embodiments that also incorporate the recited features. Moreover, unless explicitly stated to the contrary, embodiments "comprising" or "having" an element or a plurality of elements having a particular property may include additional such elements not having that property.

## Claims

1. A terminal suitable for insertion into a mounting hole in an insulating shell, the terminal comprising:
a terminal body (1) having a cylindrical portion (10); and
an injection-molded seal (2) injection molded on the cylindrical portion (10) for sealing the mounting hole and an inner cavity of the cylindrical portion (10);
wherein an opening (101) is formed in a peripheral wall of the cylindrical portion (10) to allow an injection molding material for forming the injection-molded seal (2) to enter the inner cavity of the cylindrical portion (10) through the opening (101), so as to seal the inner cavity of the cylindrical portion (10), and
wherein the cylindrical portion (10) has an injection molding zone bonded with the injection-molded seal (2), a layer of sealant is applied to a surface of the injection molding zone of the cylindrical portion (10), and the sealant is bonded between the cylindrical portion (10) and the injection-molded seal (2).

2. The terminal according to claim 1, wherein
a hydrophilic plating is formed on the surface of the injection molding zone of the cylindrical portion (10) of the terminal body (1), and the layer of sealant is applied to the hydrophilic plating.

3. The terminal according to claim 2, wherein
the hydrophilic plating is a tin plating or a silver plating electroplated on the surface of the injection molding zone of the cylindrical portion (10) of the terminal body (1).

4. The terminal according to claim 2, wherein
the hydrophilic plating is a matte tin layer or a glossy tin layer electroplated on the surface of the injection molding zone of the cylindrical portion (10) of the terminal body (1).

5. The terminal according to claim 1, wherein
at least part of the surface of the injection molding zone of the cylindrical portion (10) of the terminal body (1) is an uneven rough surface to enhance the bonding strength between the terminal body (1) and the injection-molded seal (2).

6. The terminal according to claim 5, wherein
a score, an indentation, a groove, a projection or a rolled pattern (10b) is formed on the at least part of the surface of the injection molding zone of the cylindrical portion (10) of the terminal body (1).

7. The terminal according to claim 5, wherein
the at least part of the surface of the injection molding zone of the cylindrical portion (10) of the terminal body (1) is corroded with plasma gas to increase the roughness of the at least part of the surface.

8. The terminal according to claim 1, wherein
a through hole and/or a slot hole (10a) for engaging with the injection-molded seal (2) are/is formed in the peripheral wall of the injection molding zone of the cylindrical portion (10) of the terminal body (1) to increase the bonding strength between the terminal body (1) and the injection-molded seal (2).

9. The terminal according to claim 8, wherein
a plurality of through holes and/or a plurality of arc-shaped slot holes (10a) distributed in an array are formed in the peripheral wall of the injection molding zone of the cylindrical portion (10) of the terminal body (1).

10. The terminal according to claim 1, wherein
the opening (101) is arc-shaped and extends in a circumferential direction of the cylindrical portion (10), and a pair of openings (101) are formed in the cylindrical portion (10), the pair of openings (101) being spaced apart in an axial direction of the cylindrical portion (10).

11. The terminal according to claim 10, wherein
the cylindrical portion (10) has an arc-shaped bridge (102) between the pair of openings (101), the arc-shaped bridge (102) being embedded in the injection-molded seal (2).

12. The terminal according to any one of claims 1-11, wherein
the terminal body (1) is an integral stamping-molded part, the cylindrical portion (10) of the terminal body (1) has a joint gap (10f), and the joint gap (10f) of the injection molding zone of the cylindrical portion (10) is filled with sealant, to seal the joint gap (10f) in the injection molding zone of the cylindrical portion (10).

13. The terminal according to any one of claims 1-11, wherein the injection-molded seal (2) is made of self-adhesive silicone.

14. The terminal according to any one of claims 1-11, wherein
the injection-molded seal (2) comprises:
a main body portion (20) being cylindrical and being bonded to the peripheral wall of the cylindrical portion (10) of the terminal body (1); and
a pair of reinforcing projections (21) respectively formed on front and rear end faces of the main body portion (20),
wherein the reinforcing projection (21) being arc-shaped and being bonded to the peripheral wall of the cylindrical portion (10) of the terminal body (1), to increase the bonding strength between the injection-molded seal (2) and the terminal body (1).

15. The terminal according to claim 14, wherein
the peripheral wall of the injection molding zone of the cylindrical portion (10) of the terminal body (1) is embedded in the main body portion (20) of the injection-molded seal (2) and the pair of reinforcing projections (21); and
wherein the reinforcing projection (21) has a predetermined width in an axial direction of the cylindrical portion (10) and a predetermined length in a circumferential direction of the cylindrical portion (10); and/or
wherein the injection-molded seal (2) further comprises:
a plurality of annular sealing ribs (22) formed on an outer peripheral surface of the main body portion (20) and spaced apart in an axial direction;
wherein the annular sealing ribs (22) are configured for an interference fit with an inner wall surface of the mounting hole of the insulating shell to achieve a seal between the inj ection-molded seal (2) and the inner wall surface of the mounting hole.
